# EUROPEAN PATENT APPLICATION

(11) **EP 1 890 253 A1**
(43) Date of publication of application: **20.02.2008**
(21) Application number: 06015924.1
(22) Date of filing: 31.07.2006
(51) Int. Cl.: G06K 19/077

(54) **External storage device**

(71) Applicant: Dotop Technology, Inc., Taipei County 231 (TW)
(72) Inventor: Lin, Teng-Chang, Siluo Township, Yunlin County 648 (TW)
(74) Representative: Becker Kurig Straus

(57) **Abstract**

An external storage device includes a case, a storage unit, a communication interface, a main control chip, a touch pad, a touch pad controller, a voice controller and a speaker. The storage unit is mounted in the case. The communication interface is used to communicate with a computer. The main control chip is electrically connected to the communication interface and the storage unit. The touch pad is mounted on the case. The touch pad controller is electrically connected to the touch pad and the main control chip. The voice controller is electrically connected to the main control chip to generate a voice signal according to the operational state of the main control chip. The speaker is mounted on the case and electrically connected to the voice controller to output the voice signal.

## Description

### Field of Invention

The present invention relates to a storage device. More particularly, the present invention relates to an external storage device.

### Description of Related Art

As digital data storage requirements increase, many external storage devices are becoming available. Traditionally, almost all external storage devices include a hard disk and a communication interface to communicate with a computer.

Because external storage devices are widely used by consumers, manufacturers take great effort to incorporate more functions into the external storage devices to satisfy modern requirements. For example, some external storage devices have a backup function to backup data files from a computer to the external storage device through a predetermined path.

However, as external storage devices have increasingly more functions, providing a good man-machine interface is also becoming increasingly more important. Some manufacturers mount keys on the case of the external storage device. But, the amount of keys is still limited due to the small space provided by the case of the external storage device. Moreover, if manufacturers mount a large amount of keys on the case of the external storage device, the appearance of the external storage device would be very confusing. This would adversely affect the market value of the external storage device.

Furthermore, almost all external storage devices sold in the market are unable to inform users of their current operational state Although a few of the external storage devices have a display device to show their current operational state, typical users usually keep a close watch on the monitor of the computer, not the display device of the external storage device. When the users want to know the operational state of the external storage device, the users must stop their work and take a look at the display device of the external storage device. This is also very inconvenient for the users.

For the foregoing reasons, there is a need to develop an external storage device with a good man-machine interface to improve the competitiveness of the external storage device for manufacturers, sales and consumers.

### SUMMARY

It is therefore an aspect of the present invention to provide an external storage device with a good man-machine interface, which allows users to communicate with the external storage device easily.

According to one preferred embodiment of the present invention, an external storage device includes a case, a storage unit, a communication interface, a main control chip, a touch pad, a touch pad controller, a voice controller and a speaker. The storage unit is mounted in the case. The communication interface is used to communicate with a computer. The main control chip is electrically connected to the communication interface and the storage unit to control the data transmission between the storage unit and the communication interface. The touch pad is mounted on the case to input user commands. The touch pad controller is electrically connected to the touch pad and the main control chip to control the transmission between the touch pad and the main control chip. The voice controller is electrically connected to the main control chip to generate a voice signal according to the operational state of the main control chip. The speaker is mounted on the case and electrically connected to the voice controller to output the voice signal.

It is another aspect of the present invention to provide an external storage device with voice specifications, which inform users of the operational state the external storage device.

According to another preferred embodiment of the present invention, an external storage device includes a case, a storage unit, a communication interface, a main control chip, a voice controller and a speaker. The storage unit is mounted in the case. The communication interface is used to communicate with a computer. The main control chip is electrically connected to the communication interface and the storage unit to control the data transmission between the storage unit and the communication interface. The voice controller is electrically connected to the main control chip to generate a voice signal according to the operational state of the main control chip. The speaker is mounted on the case and electrically connected to the voice controller to output the voice signal.

It is still another aspect of the present invention to provide an external storage device with a touch pad, which enables users to control the external storage device by touching the touch pad.

According to still another preferred embodiment of the present invention, an external storage device includes a case, a storage unit, a communication interface, a main control chip, a touch pad and a touch pad controller. The storage unit is mounted in the case. The communication interface is used to communicate with a computer. The main control chip is electrically connected to the communication interface and the storage unit to control the data transmission between the storage unit and the communication interface. The touch pad is mounted on the case to input user commands. The touch pad controller is electrically connected to the touch pad and the main control chip to control the transmission between the touch pad and the main control chip.

Therefore, the external storage device according the mentioned embodiments of the present invention has a touch pad, which allows users to control the external storage device by touching the touch pad. A large amount of keys are not necessarily mounted on the case of the external storage device, and the appearance of the external storage device is thus simplified. Furthermore, the man-machine interface can be more humanized due to the touch pad. In addition, the external storage device may further have a voice specification function, which informs the users of the operational state of the main control chip. Thus, the users can communicate with the external storage device more easily.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,

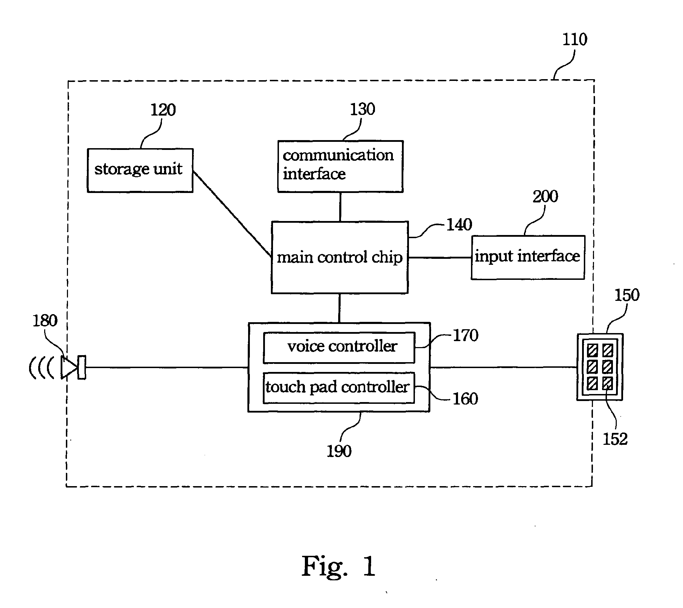

Fig. 1 is a block diagram of an external storage device according to one preferred embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

Reference is made to Fig. 1. Fig. 1 is a block diagram of an external storage device according to one preferred embodiment of this invention. As shown in Fig. 1, an external storage device includes a case 110, a storage unit 120, a communication interface 130, a main control chip 140, a touch pad 150, a touch pad controller 160, a voice controller 170 and a speaker 180. The storage unit 120 is mounted in the case 110. The communication interface 130 is used to communicate with a computer (not shown). The main control chip 140 is electrically connected to the communication interface 130 and the storage unit 120 to control the data transmission between the storage unit 120 and the communication interface 130. The touch pad 150 is mounted on the case 110 to input user commands. The touch pad controller 160 is electrically connected to the touch pad 150 and the main control chip 140 to control the transmission between the touch pad 150 and the main control chip 140. The voice controller 170 is electrically connected to the main control chip 140 to generate a voice signal according to the operational state of the main control chip 140. The speaker 180 is mounted on the case 110 and is electrically connected to the voice controller 170 to output the voice signal. The users can control the external storage device by touching the touch pad 150 and know the operational state of the main control chip 140 according to the voice signal generated by voice controller 170, such as "the system has been started", "the USB has been connected", "data processing, please wait", "the USB has been disconnected" or "the system is sleeping".

Although the external storage device according to this embodiment of the present invention has the touch pad 150, the touch pad controller 160, the voice controller 170 and the speaker 180 built therein to provide the touch controlling function and the voice specification function, this should not limit the scope of the present invention. The external storage device may have a touch pad and a touch pad controller only according to another embodiment of the present invention. Alternatively, the external storage device may have a voice controller and a speaker only as well according to still another embodiment of the present invention. That is, the touch pad, the touch pad controller, the voice controller and the speaker may not necessarily be together included in a single external storage device.

More specifically, the external storage device may display at least one graphical user interface 152 on the touch pad 150. Accordingly, the external storage device can have a more humanized man-machine interface due to the graphical user interface 152. Therefore, keys may not necessarily be mounted on the case of the external storage device, and the external storage device with the graphical user interface can thus be more competitive.

Furthermore, the voice controller 170 and the touch pad controller 160 may be software applications or hardware circuits. In addition, the voice controller 170 and the touch pad controller 160 may also be other suitable devices as required, and the voice controller 170 and the touch pad controller 160 need not all be software applications or all be hardware circuits. For example, the voice controller 170 and the touch pad controller 160 shown in Fig. 1 are built in a man-machine interface chip 190. The man-machine interface chip 190 is used to process input/output data, such as outputting the voice signal or controlling the touch pad.

In addition, the main control chip 140 has an input interface 200 to input a control signal. More specifically, the input interface 200 may be a general-purpose input/output (GPIO) pin or chip expansion to expand the application of the main control chip 140.

The communication interface 130 may be a universal serial bus (USB). Because many commercial computers have USB connectors, the external storage device can employ the USB protocol as the communication interface 130 to be compatible with more computers. Alternatively, the communication interface 130 may be an IEEE 1394 bus as well to have a better data transmitting speed and have increased reliability between the external storage device and the computer.

The data transmission between the man-machine interface chip 190, the main control chip 140 and the speaker 180 may be done by an IIC communication interface. Furthermore, the data transmission between the main control chip and the flash memory where the control codes are stored may **also be done by an IIC communication interface.**

In conclusion, the invention has at least the following advantages:
(1) the external storage device according the mentioned embodiments of the present invention can be controlled by touching the touch pad, and the appearance of the external storage device is thus simplified because a large amount of keys are not necessarily mounted on the case of the external storage device; and
(2) the external storage device may further have a voice specification function, which informs the users of the operational state of the main control chip, and thus the users can communicate with the external storage device more easily.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An external storage device comprising:
a case;
a storage unit mounted in the case;
a communication interface for communicating with a computer;
a main control chip electrically connected to the communication interface and the storage unit for controlling a first data transmission between the storage unit and the communication interface;
a touch pad mounted on the case;
a touch pad controller electrically connected to the touch pad and the main control chip for controlling a second data transmission between the touch pad and the main control chip;
a voice controller electrically connected to the main control chip for generating a voice signal according to the operational state of the main control chip; and
a speaker mounted on the case and electrically connected to the voice controller for outputting the voice signal.

2. The external storage device of claim 1, further comprising at least one graphical user interface displayed on the touch pad.

3. The external storage device of claim 1, wherein the voice controller and the touch pad controller are built in a man-machine interface chip.

4. An external storage device comprising:
a case;
a storage unit mounted in the case;
a communication interface for communicating with a computer;
a main control chip electrically connected to the communication interface and the storage unit for controlling a data transmission between the storage unit and the communication interface;
a voice controller electrically connected to the main control chip for generating a voice signal according to the operational state of the main control chip; and
a speaker mounted on the case and electrically connected to the voice controller for outputting the voice signal.

5. The external storage device of claim 4, wherein the voice controller is built in a man-machine interface chip.

6. An external storage device comprising:
a case;
a storage unit mounted in the case;
a communication interface for communicating with a computer;
a main control chip electrically connected to the communication interface and the storage unit for controlling a first data transmission between the storage unit and the communication interface;
a touch pad mounted on the case; and
a touch pad controller electrically connected to the touch pad and the main control chip for controlling a second data transmission between the touch pad and the main control chip.

7. The external storage device of claim 6, further comprising at least one graphical user interface displayed on the touch pad.

8. The external storage device of claim 6, wherein the touch pad controller are built in a man-machine interface chip.

9. The external storage device of claim 6, wherein the main control chip has an input interface for inputting a control signal.

10. The external storage device of claim 6, wherein the communication interface is a universal serial bus.
